(19) **Europäisches Patentamt**
**European Patent Office**
**Office européen des brevets**

(11) **EP 3 730 365 B1**

(12) **FASCICULE DE BREVET EUROPEEN**

(45) Date de publication et mention
de la délivrance du brevet:
**01.09.2021 Bulletin 2021/35**

(51) Int Cl.:
***B60W 30/06*** *(2006.01)* ***B62D 15/02*** *(2006.01)*

(21) Numéro de dépôt: **20163369.0**

(22) Date de dépôt: **16.03.2020**

(54) **PROCÉDÉ ET SYSTÈME D'AIDE AU STATIONNEMENT D'UN VÉHICULE AUTOMOBILE COMPRENANT UN MODULE DE RÉGULATION DE TOUTE DISCONTINUITÉ DANS LA DISTANCE RESTANTE À PARCOURIR**

HILFSVERFAHREN UND -SYSTEM ZUM EINPARKEN FÜR EIN KRAFTFAHRZEUG, DAS EIN REGULIERUNGSMODUL FÜR UNREGELMÄSSIGKEITEN BEI DER VERBLEIBENDEN ZURÜCKZULEGENDEN STRECKE UMFASST

METHOD AND SYSTEM FOR ASSISTING THE PARKING OF A MOTOR VEHICLE COMPRISING A MODULE FOR CONTROLLING ANY DISCONTINUITY IN THE REMAINING DISTANCE TO BE TRAVELLED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2019 FR 1904456**

(43) Date de publication de la demande:
**28.10.2020 Bulletin 2020/44**

(73) Titulaire: **Renault S.A.S.**
**92100 Boulogne-Billancourt (FR)**

(72) Inventeurs:
• **GUERPILLON, Mathieu**
**78280 Guyancourt (FR)**
• **KOO, Jong-Hoon**
**92800 Puteaux (FR)**
• **SENE, Pape-Abdoulaye**
**78000 VERSAILLES (FR)**

(56) Documents cités:
**WO-A1-2019/011522    FR-A1- 3 063 701**
**US-A1- 2019 092 319**

**Description**

La présente invention concerne le domaine d'aides à la conduite d'un véhicule automobile, et notamment les aides au stationnement.

Plus particulièrement, l'invention concerne les procédés et systèmes d'aide au stationnement entièrement ou semi automatisés pour la réalisation de manœuvre de stationnement, par exemple de type créneau.

De tels procédés et systèmes d'aide au stationnement permettent la détection d'une place de stationnement puis prennent le contrôle sur la direction assistée électrique du véhicule afin de réaliser la manœuvre de stationnement. L'opération de braquage des roues en vue de la manœuvre de stationnement est ainsi entièrement réalisée de manière automatique.

Le conducteur reste cependant responsable du changement de rapport, de l'accélération et du freinage du véhicule.

On connait du document WO 2014/167255 - A1 (Renault) un procédé de planification de trajectoire pour effectuer une manœuvre de stationnement automatisée d'un véhicule automobile. Toutefois, un tel procédé ne tient pas compte de la vitesse longitudinale du véhicule.

On peut également se référer au document WO 2014/191209 - A1 (Renault) qui décrit un procédé de délégation des manœuvres de stationnement du véhicule à un système automatisé.

Dans de tels procédés, l'accélération est sous l'entière responsabilité du conducteur. Il existe alors un risque que le véhicule roule à une vitesse excessive pouvant engendrer la collision avec des obstacles fixes ou mobiles se trouvant à proximité du véhicule. De plus, la détection d'obstacles, le freinage et l'immobilisation du véhicule sont également sous le contrôle exclusif du conducteur.

Les manœuvres de stationnement deviennent de plus en plus automatisées, notamment l'accélération et le freinage du véhicule. Il devient donc primordial que les procédés et systèmes d'aide au stationnement soient configurés pour anticiper et gérer les opérations habituellement sous la responsabilité du conducteur.

Le document US2019/092319 décrit un procédé de manœuvre d'un véhicule dans lequel on détermine une distance restant à parcourir, une distance de collision, une distancé entre le véhicule et un objet.

On connait du document FR 3 063 701 - A1 (Renault) un procédé de régulation en boucle fermée de la vitesse et de la position du véhicule depuis une position donnée vers une place de stationnement libre précédemment détectée et proposée au conducteur.

A tout instant, un tel procédé est capable de prendre le contrôle du moteur de la boite de vitesses et du frein afin d'obtenir une vitesse longitudinale du véhicule suivant une valeur cible de consigne de vitesse tout en respectant une distance restante à parcourir en fonction de la vitesse effective du véhicule.

Lorsque la distance restante à parcourir devient nulle, le véhicule doit avoir une vitesse proche de zéro. La vitesse du véhicule étant asservie à la valeur cible de consigne de vitesse, ladite valeur cible doit également être proche de zéro.

Le document FR 3 063 701 - A1 (Renault) propose ainsi une régulation en boucle ouverte configurée pour activer le système de freinage lorsque la distance restante à parcourir est proche de zéro.

Toutefois, dans un tel procédé, la dynamique de la distance restante à parcourir est un facteur de premier ordre sur le confort de la manœuvre de stationnement. Ainsi, un changement brutal de la distance restante à parcourir se répercute sur la valeur cible de consigne de vitesse lors de la phase de décélération du véhicule. Il en résulte un freinage inconfortable pour les passagers du véhicule.

Le document WO2019/011522 (Renault), sur lequel sont basés les préambules des revendications 1 et 8, propose un module de régulation de vitesse en fonction de la distance à parcourir mais sans moyen de régulation de toute discontinuité dans la distance restante à parcourir.

On connait également le document DE 10 2008 064 041 - A1 (Valéo) qui propose de réduire les perturbations de la vitesse par une redondance de mesures avant la manœuvre de stationnement. Toutefois, cela permet seulement de réduire l'impact du recalcul de trajectoire sur la distance restante à parcourir. Les obstacles imprévus entrainant une discontinuité de la distance restante à parcourir ne sont pas pris en compte. De plus, un traitement par scénarios envisageables est difficilement implémentable dû au grand nombre de scénarios possibles.

Il existe un besoin d'améliorer les procédés et systèmes d'aide à la conduite afin de proposer au conducteur une aide au stationnement la plus confortable possible sans compromis sur les performances et sur la sécurité.

L'objet de la présente invention est donc de fournir un système et un procédé d'aide au stationnement capables de prendre en compte un obstacle tout en réduisant l'impact sur la manœuvre d'une mise à jour brutale ou d'une discontinuité de la distance restante à parcourir.

L'invention a pour objet un système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur œdométrique, tel que par exemple des capteurs de positions des roues, capteur d'angle volant, capteurs de sens de mouvement, etc..., un accéléromètre, et un moyen d'activation d'une fonction de pilotage automatique.

Le système comprend un module de régulation de vitesse et un module de régulation de toute discontinuité dans la distance restante à parcourir, par exemple par la présence d'un obstacle.

Le système comprend, par exemple, quatre états de fonctionnement, un état initial (E0) correspondant à la phase de recherche d'une place de stationnement par le système de détection de places de stationnement, un premier état (E1) correspondant à une phase d'attente du début de la manœuvre, un deuxième état (E2) correspondant à une phase d'annulation du freinage, un troisième état (E3) de mise en mouvement et un quatrième état (E4) correspondant à la phase d'activation du freinage.

Avantageusement, le module de régulation de vitesse comprend un module de calcul d'une valeur de consigne de vitesse du véhicule en fonction de la vitesse maximale du véhicule à ne pas dépasser et la distance restante à parcourir.

Ces informations proviennent du système de détection des places de parking et des obstacles autour du véhicule.

Le module de régulation de vitesse peut comprendre en outre un comparateur configuré pour déterminer un écart entre ladite valeur de consigne de vitesse du véhicule et la vitesse réelle du véhicule. Cet écart est ensuite transmis à un module de calcul des requêtes de couple et respectivement pour la boite de vitesse et pour le système de freinage, la valeur de consigne de vitesse du véhicule étant calculée, selon l'invention, en fonction de la vitesse maximale du véhicule à ne pas dépasser et la vitesse maximale autorisée permettant un arrêt confortable à la distance voulue avec une bonne précision, ladite vitesse étant dépendante de la distance restante à parcourir.

La deuxième composante de la vitesse peut adopter plusieurs formes tout en restant dépendante de la distance restante à parcourir afin d'assurer pour une distante restante à parcourir nulle, une vitesse nulle. Selon l'invention, le module de régulation de toute discontinuité sur la distance restante à parcourir comprend un module de vérification que le système se trouve à un état de mise en mouvement correspondant à l'état (E3) et un module de détection d'une discontinuité configuré pour détecter un saut sur la distance restante à parcourir ayant un impact sur la consigne de vitesse. L'état de mise en mouvement du système d'aide au stationnement, automatisé ou semi-automatisé, correspond notamment à la génération d'une consigne de vitesse non nulle.

Ainsi, une discontinuité est détectée et active donc l'entrée en mode dégradé si les trois conditions ci-dessous sont respectées :

    1. Lorsque la différence entre la distante restante à parcourir avant la discontinuité et la distante restante à parcourir après la discontinuité est supérieure ou égale à une valeur de seuil S1, par exemple égale à 20cm.

    2. Lorsque la vitesse maximale autorisée après la discontinuité est inférieure à la consigne de vitesse avant la discontinuité.

    3. Lorsque la distance restante à parcourir après la discontinuité est supérieure à une valeur de seuil S2 sous laquelle le passage en mode dégradé n'est plus possible, par exemple compris entre 0cm et 30cm. Si l'une de ces trois conditions n'est pas vérifiée, le profil de vitesse reste en mode nominal.

Le mode dégradé permet de réduire l'impact de la transition entre la valeur de distance restante à parcourir avant la discontinuité et la valeur de distance restante à parcourir après la discontinuité.

Ce profil de vitesse en mode dégradé est activé jusqu'à ce que la distance restante à parcourir est égale à la distance critique. La valeur de seuil S2 doit toujours être supérieure à la distance critique Selon l'invention, le module de régulation des discontinuités comprend un module de remplacement du profil de décélération nominal par un profil de décélération en mode dégradé si une discontinuité est détectée et un module de sortie dudit mode dégradé.

Le mode dégradé permet de réduire l'impact de la transition entre la valeur de distance restante à parcourir avant la discontinuité et la valeur de distance restante à parcourir après la discontinuité.

Ainsi, un tel système permet de gérer différentes dynamiques possibles de la distance restante à parcourir tout en maximisant le confort de la manœuvre de stationnement.

Par exemple, le module de remplacement de profil prend en compte la distance restante à partir de laquelle le profil de décélération en mode dégradé doit rejoindre le profil nominal afin de respecter une distance critique selon l'équation :

[Math 3]

$$V_{deg}^+(d_{-end}) = V_{tau}^+(d_{-end})$$

Avec un point de départ du profil de décélération en mode dégradé selon l'équation :

[Math 4]

$$V^+_{deg}(d\_rest(+)) = V\_cons(-)$$

Par exemple, le module de sortie du mode dégradé est configuré pour sortir dudit mode dégradé lorsqu'une des deux conditions suivantes sont vérifiées, à savoir lorsque la distance restante à parcourir est inférieure à la distance critique ou lorsque la vitesse maximale autorisée après discontinuité est supérieure ou égale à la consigne de vitesse avant discontinuité, notamment dans le cas où un obstacle mobile sort de la trajectoire du véhicule.

Le module de régulation des discontinuités peut être avantageusement configuré pour continuer à détecter toute discontinuité après le retour au profil de décélération en mode nominal. En effet, plusieurs discontinuités sont possibles et à basculer en mode de décélération dégradé si les conditions ci-dessus sont respectées.

Le module de régulation des discontinuités peu comprendre de manière optionnelle un module d'inhibition de toutes les limitations liées au confort au niveau du freinage, notamment lorsque le saut sur la distance restante à parcourir est très important et quand la distance d'arrêt, c'est-à-dire la distance restante à parcourir ou encore la distance avec l'obstacle, être très faible.

Selon un deuxième aspect, l'invention concerne un procédé d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur œdométrique, un accéléromètre, une interface visuelle et sonore et un moyen d'activation d'une fonction pilotage automatique.

Selon le procédé, on calcule une valeur de consigne de vitesse du véhicule en fonction de la vitesse maximale du véhicule à ne pas dépasser et la distance restante à parcourir et l'on régule de toute discontinuité sur la distance restante à parcourir.

Lors de la régulation des discontinuités, on vérifie que le système se trouve à un état de mise en mouvement, on vérifie qu'une discontinuité est détectée, on remplace le profil de décélération nominal par un profil de décélération en mode dégradé et on prévoit la sortie dudit mode dégradé.

Un tel procédé permet, lors de la détection d'un obstacle, un ralentissement progressif du véhicule ou une immobilisation du véhicule si nécessaire tout en assurant une décélération la plus confortable possible du véhicule.

Une discontinuité est détectée si les trois conditions ci-dessous sont respectées :

1. Lorsque la différence entre la distante restante à parcourir avant la discontinuité et la distante restante à parcourir après la discontinuité est supérieure ou égale à une valeur de seuil S1, par exemple égale à 20cm.
2. Lorsque la vitesse maximale autorisée après la discontinuité est inférieure à la consigne de vitesse avant la discontinuité.
3. Lorsque la distance restante à parcourir après la discontinuité est supérieure à une valeur de seuil S2 sous laquelle le passage en mode dégradé n'est plus possible, par exemple compris entre 0cm et 30cm.

Si l'une de ces trois conditions n'est pas vérifiée, le profil de vitesse reste en mode nominal.

Avantageusement, on prévoit la sortie du mode dégradé lorsqu'une des deux conditions suivantes sont vérifiées, à savoir lorsque la distance restante à parcourir est inférieure à la distance critique ou lorsque la vitesse maximale autorisée après discontinuité est supérieure ou égale à la consigne de vitesse avant discontinuité.

D'autres buts, caractéristiques et avantages de l'invention apparaîtront à la lecture de la description suivante, donnée uniquement à titre d'exemple non limitatif, et faite en référence aux dessins annexés sur lesquels :

La figure 1 représente schématiquement un système d'aide au stationnement d'un véhicule automobile selon l'invention ;
La figure 2 illustre les états du système d'aide au stationnement selon la figure 1 ;
La figure 3 illustre en détails le module de régulation de vitesse du système d'aide au stationnement de la figure 1 ;
La figure 4 illustre le profil de vitesse maximum autorisé ;
La figure 5 illustre un profil de la vitesse en mode nominal lors des états du système visibles sur la figure 2 ;
La figure 6 illustre en détails le module de régulation de toute discontinuité dans la distance restante à parcourir du système d'aide au stationnement de la figure 1 ;
La figure 7 illustre un profil de vitesse en mode dégradé lors des états du système lors des états du système visibles sur la figure 2 ; et
La figure 8 illustre les étapes d'un procédé d'aide au stationnement selon l'invention mis en œuvre par le système d'aide au stationnement de la figure 1.

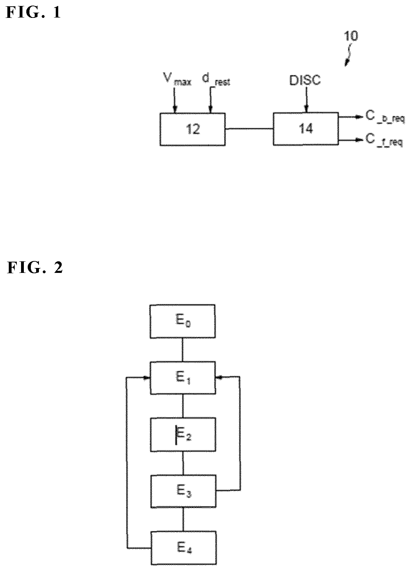

Sur la figure 1, on a représenté de manière très schématique un système 10 d'aide à la conduite et notamment au stationnement d'un véhicule automobile (non représenté). Le véhicule automobile comprend les éléments suivants qui ne sont pas représentés sur les figures pour plus de clarté : un système de détection d'obstacles situés à proximité du véhicule, par exemple à une distance inférieure à 2m, un système de détection de places de stationnement, une direction assistée électrique pilotable en angle de braquage, un moteur et un système de freinage tous les deux pilotables en couple, une boite de vitesse automatique ou un système dit «shift by wire », au moins un capteur odométrique, un accéléromètre, une interface visuelle et sonore ainsi qu'un moyen d'activation d'une fonction pilotage automatique ou « homme-mort ».

Le système 10 permet de détecter et d'atténuer les discontinuité DISC dans la distance restante à parcourir lors de la manœuvre de stationnement.

Le système 10 comprend cinq états E0, E1, E2, E3 et E4 visibles sur la figure 2.

Le système 10 comprend un module 12 de régulation de vitesse et un module 14 de régulation de toute discontinuité DISC dans la distance restante à parcourir d_rest, par exemple par la présence d'un obstacle.

L'état initial E0 du système d'aide au stationnement, correspond à la phase de recherche d'une place de stationnement. A cet état E0, le système 10 d'aide au stationnement n'est pas actif, c'est-à-dire qu'aucun pilotage n'est réalisé sur les actionneurs. Le conducteur du véhicule reste entièrement responsable de son véhicule. Pour activer le système 10 d'aide au stationnement, le conducteur doit appuyer sur un moyen d'activation (non représenté) d'une fonction de pilotage automatique ou « homme-mort » présent par exemple sur le tableau de bord du véhicule, sélectionner le type de manœuvre de stationnement, tel que par exemple un créneau, ainsi que le côté du véhicule à partir duquel le conducteur souhaite stationner le véhicule. Le choix du type de place et du côté du stationnement peuvent dans une autre réalisation être faits de façon automatique par le système d'aide au stationnement. L'interface homme-machine (non représentée) du véhicule invite alors le conducteur à avancer jusqu'à la détection d'une place de stationnement puis à arrêter le véhicule.

Une fois la place de stationnement validée par le conducteur, le système 10 d'aide au stationnement passe à l'état E1, correspondant à une phase d'attente du début de la manœuvre.

En cas de stationnement par créneau, le conducteur doit engager la marche arrière. Lorsque la marche arrière est engagée et que le conducteur transmet l'ordre de démarrer la manœuvre de stationnement au système d'aide au stationnement, celui-ci passe aux états E2, E3, E4 d'automatisation de la manœuvre de stationnement en contrôlant la direction et les actionneurs longitudinaux (moteur, boite de vitesses, système de freinage).

L'état E2 correspond à une phase d'annulation du système de freinage, dit « brake cancel » en termes anglo-saxons.

A la fin de l'annulation complète du système de freinage, celui-ci passe à l'état E3, dit « movement régulation » en termes anglo-saxons.

A la fin du mouvement, et sans interruptions de l'état E3, le système d'aide au stationnement passe à l'état E4 correspondant à la phase d'activation du freinage.

Une fois le véhicule à l'arrêt, le système 10 d'aide au stationnement passe à l'état E1 qui correspond à la phase d'attente du prochain mouvement.

Le module 12 de régulation de vitesse comprend un module 16 de calcul d'une valeur de consigne de vitesse du véhicule V_cons en fonction de la vitesse maximale V_max du véhicule à ne pas dépasser et la distance restante d_rest à parcourir. Ces informations proviennent du système de détection des places de parking et des obstacles autour du véhicule. Le module 12 de régulation de vitesse comprend en outre un comparateur 18 configuré pour déterminer un écart ΔV entre ladite valeur de consigne de vitesse du véhicule V_cons et la vitesse réelle V du véhicule. Cet écart ΔV est ensuite transmis à un module 20 de calcul des requêtes de couple C_b_req et C_f_req respectivement pour la boite de vitesse et pour le système de freinage.

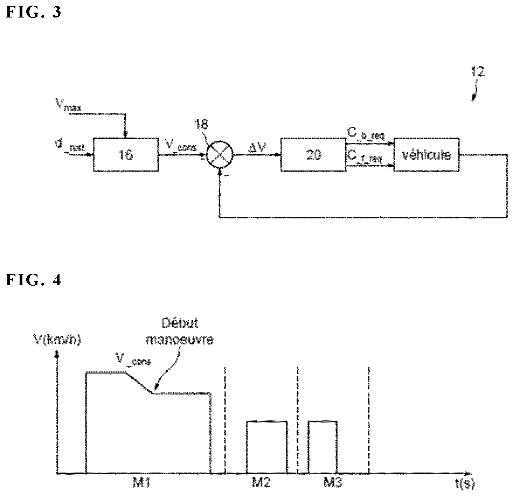

La valeur de consigne de vitesse du véhicule V_cons est calculée en fonction de deux composantes de la vitesse, à savoir la vitesse maximale V_max du véhicule à ne pas dépasser dont le profil de vitesse est illustré sur la figure 4, et la vitesse maximale autorisée Vtau afin de pouvoir s'arrêter confortablement à la distance voulue avec une bonne précision. Cette dernière vitesse Vtau est dépendante de la distance restante à parcourir.

Sur la courbe de la figure 4 qui illustre en abscisses le temps t en secondes et en ordonnées la vitesses V en km/h, on distingue trois mouvements : un premier mouvement M1 lors duquel la vitesse varie de 5km/h à 3km/h lors du début de la manœuvre, un deuxième et troisième mouvement M2 et M3 lors desquels la vitesse est d'environ 2km/h. La vitesse V est de préférence inférieure à 7km/h pour la sécurité de la manœuvre de stationnement.

La deuxième composante de la vitesse Vtau peut adopter plusieurs formes tout en restant dépendante de la distance restante à parcourir afin d'assurer pour une distante restante d_rest à parcourir nulle, une vitesse V nulle.

[Math 1]
$$Vtau\,(d\_rest = 0) = 0$$

Avec :

Vtau, la consigne de vitesse pour passer de 3km/h à 0km/h pour le premier mouvement M1 et de 2km/h à 0km/h pour les autres mouvements M2, M3 ; et
d_rest, la distance restante à parcourir en m.

Par exemple, Vtau peut s'écrire selon l'équation suivante :

[Math 2]

$$Vtau = \frac{\text{d\_rest}}{\tau(\text{d\_rest})}$$

Avec :

$\tau$, une fonction de la distance restante à parcourir d_rest.

$\tau$(d_rest) peut être, par exemple, un tableau à trois points implémenté pour la facilité et avec des points choisis pour répondre aux objectifs de confort. En variante, $\tau$(d_rest) pourrait être une fonction.

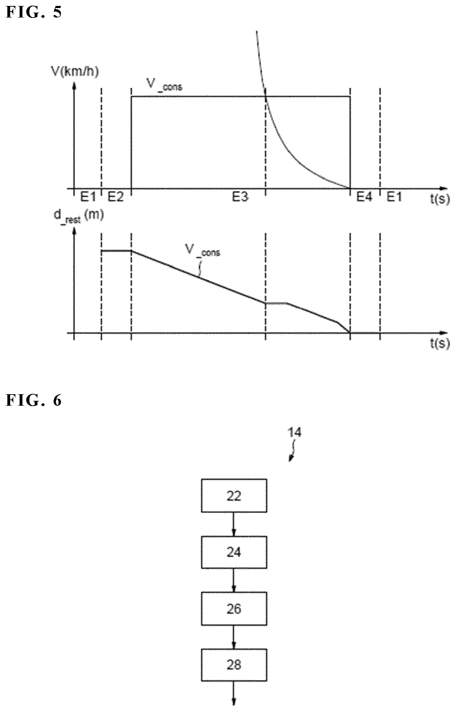

Sur la figure 5 est représenté un profil de la vitesse lors des états du système 10.
La deuxième composante de la vitesse Vtau étant dépendante de la distance restante à parcourir d_rest, une discontinuité de cette dernière engendrerait une discontinuité sur le profil de décélération de la vitesse de consigne V_cons.
Le module 14 de régulation de toute discontinuité sur la distance restante à parcourir d_rest comprend à cet effet, un module 22 de vérification que le système se trouve à l'état E3 et un module 24 de détection d'une discontinuité configuré pour détecter un saut sur la distance restante à parcourir d_rest ayant un impact sur la consigne de vitesse V_cons.
Le module 14 de régulation des discontinuités comprend un module 26 de remplacement du profil de décélération nominal par un profil de décélération en mode dégradé et un module 28 de sortie dudit mode dégradé.
Ainsi, une discontinuité est détectée si les trois conditions ci-dessous sont respectées :

1. Lorsque la différence $\Delta$d_rest entre la distante restante à parcourir d_rest(-) avant la discontinuité et la distante restante à parcourir d_rest(+) après la discontinuité est supérieure ou égale à une valeur de seuil S1, par exemple égale à 20cm.
2. Lorsque la vitesse maximale autorisée Vtau(+) après la discontinuité est inférieure à la consigne de vitesse V_cons (-) avant la discontinuité.
3. Lorsque la distance restante à parcourir d_rest(+) après la discontinuité est supérieure à une valeur de seuil S2 sous laquelle le passage en mode dégradé n'est plus possible, par exemple compris entre 0cm et 30cm.

Si l'une de ces trois conditions n'est pas vérifiée, le profil de vitesse reste en mode nominal.
Le mode dégradé permet de réduire l'impact de la transition entre la valeur de distance restante à parcourir d_rest (-) avant la discontinuité et la valeur de distance restante à parcourir d_rest (+) après la discontinuité.
Le module 26 prend en compte la distance restante à partir de laquelle le profil de décélération en mode dégradé doit rejoindre le profil nominal afin de respecter la distance d'arrêt d_end selon l'équation suivante :

[Math 3]

$$V_{deg}^{+}(d\_end) = V_{tau}^{+}(d\_end)$$

Avec:

$V_{deg}^{+}$, le profil de décélération en mode dégradé pour avoir une continuité de la vitesse de consigne sur la transition.

Plus la distance critique d_end est proche de 0cm, plus on peut répartir la décélération sur la distance restante à parcourir d_rest. En général, la distance critique d_end est comprises entre 0cm et 30cm.
Concernant le point de départ du profil de décélération en mode dégradé, on veut que :

[Math 4]

$$V_{deg}^{+}(d\_rest(+)) = V\_cons(-)$$

Ainsi, le profil de vitesse est défini selon les deux équations Math 3 et Math 4.

Par exemple, le profil de vitesse dégradé est une fonction linéaire selon l'équation suivante :

[Math 5]

$$V_{deg}(d) = \frac{V_{target}^{-} - V_{tau}(d\_end)}{d_{saut}^{+} - d\_end}(d - d\_end) + V_{tau}(d\_end)$$

Ce profil de vitesse en mode dégradé est en activité jusqu'à ce que la distance restante à parcourir d_rest est égale à la distance critique d_end. Ensuite, le profil de décélération en mode nominal reprendra.

En variante, on pourrait prévoir que le profil de vitesse dégradé est une fonction du deuxième ordre choisie pour améliorer davantage le confort de la manœuvre de stationnement.

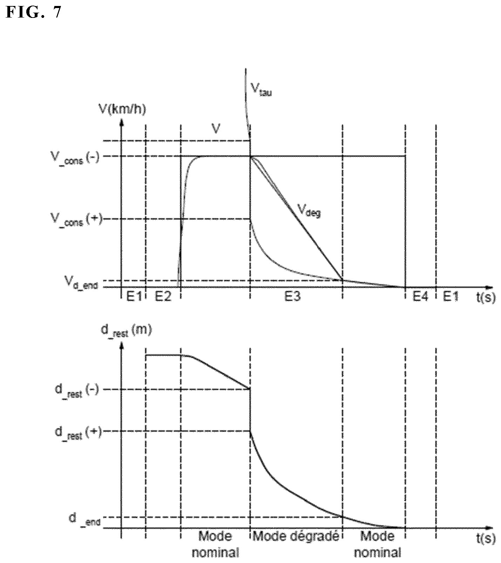

La figure 7 illustre un profil de vitesse en mode dégradé lors des états du système 10.

Lors de l'exécution du profil de décélération en mode dégradé, le module 14 de régulation de toute discontinuité continue à détecter toute discontinuité car plusieurs discontinuités sont possibles et à basculer en mode de décélération dégradé si les conditions ci-dessus sont respectées.

Le module 14 de régulation de toute discontinuité comprend un module 30 optionnel d'inhibition de toutes les limitations liées au confort au niveau du freinage, notamment lorsque le saut sur la distance restante à parcourir est très important et quand la distance critique est très faible.

Le module 28 de sortie du mode dégradé est configuré pour sortir dudit mode dégradé lorsqu'une des deux conditions sont vérifiées, à savoir lorsque le point de transition entre le profil de décélération en mode dégradé et le profil en mode nominal a été rejoint, c'est-à-dire lorsque la distance restante à parcourir d_rest est inférieure à la distance critique d_end.

La deuxième condition est lorsque le saut positif rendant l'utilisation du profil de décélération en mode nominal à nouveau possible, c'est-à-dire la vitesse maximale autorisée après discontinuité Vtau (+) est supérieure ou égale à la consigne de vitesse avant discontinuité V_cons (-), notamment dans le cas où un obstacle mobile sort de la trajectoire du véhicule.

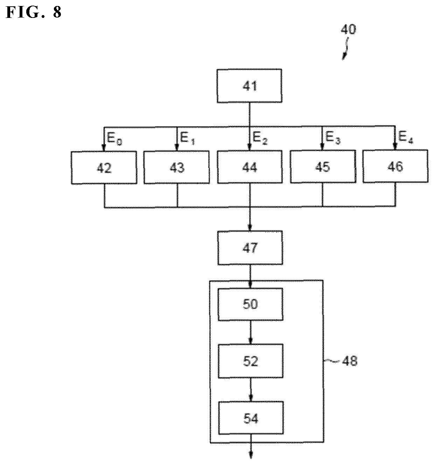

La figure 8 représente un organigramme de mise en œuvre d'un procédé 40 d'aide au stationnement d'un véhicule automobile.

Le procédé 40 permet le stationnement du véhicule depuis une voie de circulation vers un emplacement libre de stationnement, ainsi que la sortie de ladite place de stationnement vers la voie de circulation.

Le procédé 40 comprend une étape 41 de détermination de l'état E du système d'aide au stationnement, c'est-à-dire un des états E0 à E4 précédemment définis.

Lors de l'état initial E0, le procédé comprend une étape 42 de recherche d'une place de stationnement.

Une fois la place de stationnement validée par le conducteur, le procédé comprend une étape 43 correspondant à l'état E1 d'attente du début de la manœuvre.

Lorsque les conditions pour engager la manœuvre sont réunies, c'est-à-dire, en cas de stationnement par créneau, lorsque la marche arrière est engagée par le conducteur et que le conducteur transmet l'ordre de démarrer la manœuvre de stationnement, le procédé comprend une étape 44 correspondant à l'état E2 d'annulation du freinage.

A la fin de l'annulation complète de la consigne de freinage, le procédé passe à l'étape 45 correspondant à l'état E3.

A la fin du mouvement, et sans interruption de l'état E3, le procédé passe à l'étape 46 correspondant à l'état E4 d'activation du freinage.

Le procédé 30 comprend en outre une étape 47 de calcul d'une valeur de consigne de vitesse du véhicule V_cons en fonction de la vitesse maximale V_max du véhicule à ne pas dépasser et la distance restante d_rest à parcourir. Ces informations proviennent du système de détection des places de parking et des obstacles autour du véhicule. Le module 12 de régulation de vitesse comprend en outre un comparateur configuré pour déterminer un écart $\Delta V$ entre ladite valeur de consigne de vitesse du véhicule V cons et la vitesse réelle V du véhicule. Cet écart $\Delta V$ est ensuite transmis à un module de calcul des requêtes de couple C_b_req et C_f_req respectivement pour la boite de vitesse et pour le système de freinage.

La valeur de consigne de vitesse du véhicule V_cons est calculée en fonction de deux composantes de la vitesse, à savoir la vitesse maximale V_max du véhicule à ne pas dépasser dont le profil de vitesse est illustré sur la figure 4, et la vitesse maximale autorisée Vtau afin de pouvoir s'arrêter confortablement à la distance voulue avec une bonne précision. Cette dernière vitesse Vtau est dépendante de la distance restante à parcourir.

Le procédé 30 comprend en outre une étape 48 de régulation de toute discontinuité sur la distance restante à parcourir d_rest dans lequel on vérifie, à l'étape 50, que le système se trouve à l'état E3 et qu'une discontinuité est détectée, c'est à dire un saut sur la distance restante à parcourir d_rest ayant un impact sur la consigne de vitesse V_cons.

Ainsi, une discontinuité est détectée si les trois conditions ci-dessous sont respectées :

1. Lorsque la différence Δd_rest entre la distante restante à parcourir d_rest(-) avant la discontinuité et la distante restante à parcourir d_rest(+) après la discontinuité est supérieure ou égale à une valeur de seuil S1, par exemple égale à 20cm.

2. Lorsque la vitesse maximale autorisée Vtau(+) après la discontinuité est inférieure à la consigne de vitesse V_cons (-) avant la discontinuité.

3. Lorsque la distance restante à parcourir d_rest(+) après la discontinuité est supérieure à une valeur de seuil S2 sous laquelle le passage en mode dégradé n'est plus possible, par exemple compris entre 0cm et 30cm.

Si l'une de ces trois conditions n'est pas vérifiée, le profil de vitesse reste en mode nominal.

Lors de l'étape 48 de régulation des discontinuités, on remplace, à l'étape 52, le profil de décélération nominal par un profil de décélération en mode dégradé puis on prévoit la sorte dudit mode dégradé.

Le mode dégradé permet de réduire l'impact de la transition entre la valeur de distance restante à parcourir d_rest (-) avant la discontinuité et la valeur de distance restante à parcourir d_rest (+) après la discontinuité.

L'étape 52 de remplacement du profil de décélération nominal par un profil de décélération en mode dégradé prend en compte la distance restante à partir de laquelle le profil de décélération en mode dégradé doit rejoindre le profil nominal afin de respecter la distance critique d_end selon l'équation suivante :

[Math 3]

$$V_{deg}^+(d_{\_end}) = V_{tau}^+(d_{\_end})$$

Avec:

$V^+_{deg}$, le profil de décélération en mode dégradé pour avoir une continuité de la vitesse de consigne sur la transition.

Plus la distance critique d_end est proche de 0cm, plus on peut répartir la décélération sur la distance restante à parcourir d_rest. En général, la distance critique d_end est comprises entre 0cm et 30cm.

Concernant le point de départ du profil de décélération en mode dégradé, on veut que :

[Math 4]

$$V_{deg}^+(d\_rest(+)) = V\_cons(-)$$

Ainsi, le profil de vitesse est défini selon les deux équations Math 3 et Math 4.

Par exemple, le profil de vitesse dégradé est une fonction linéaire selon l'équation suivante :

[Math 5]

$$V_{deg}(d) = \frac{V_{target}^- - V_{tau}(d_{\_end})}{d_{saut}^+ - d\_end}(d - d_{\_end}) + V_{tau}(d_{\_end})$$

Ce profil de vitesse en mode dégradé est activé jusqu'à ce que la distance restante à parcourir d_rest est égale à la distance critique d_end. Ensuite, le profil de décélération en mode nominal reprendra.

En variante, on pourrait prévoir que le profil de vitesse dégradé est une fonction du deuxième ordre choisie pour améliorer davantage le confort de la manœuvre de stationnement.

Lors de l'exécution du profil de décélération en mode dégradé, on continue à détecter toute discontinuité car plusieurs discontinuités sont possibles et à basculer en mode de décélération dégradé si les conditions ci-dessus sont respectées.

Lors de l'étape 48 de régulation de toute discontinuité, on pourrait prévoir l'inhibition de toutes les limitations liées au confort au niveau du freinage, notamment lorsque le saut sur la distance restante à parcourir est très important et quand la distance critique est très faible.

L'étape 54 de sortie du mode dégradé est prévue lorsqu'au moins une des deux conditions sont vérifiées, à savoir lorsque le point de transition entre le profil de décélération en mode dégradé et le profil en mode nominal a été rejoint, c'est-à-dire lorsque la distance restante à parcourir d_rest est inférieure à la distance critique d_end.

La deuxième condition est lorsque le saut positif rendant l'utilisation du profil de décélération en mode nominal à nouveau possible, c'est-à-dire la vitesse maximale autorisée après discontinuité Vtau (+) est supérieure ou égale à la consigne de vitesse avant discontinuité V_cons (-), notamment dans le cas où un obstacle mobile sort de la trajectoire du véhicule.

Grace à l'invention, on peut gérer tous les cas entrainant une discontinuité de la distance restante à parcourir en maximisant le confort du conducteur et en gardant une bonne précision d'arrêt.

**Revendications**

1. Système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur œdométrique, un accéléromètre, et un moyen d'activation d'une fonction de pilotage automatique, où le système d'aide au stationnement comprend :

   un module (12) de régulation de vitesse comprenant un module (16) de calcul d'une valeur de consigne de vitesse du véhicule (V_cons) en fonction de la vitesse maximale (V_max) du véhicule à ne pas dépasser et la distance restante (d_rest) à parcourir ; et
   un module (14) de régulation de toute discontinuité dans la distance restante à parcourir (d_rest) comprenant :

      un module (22) de vérification que le système se trouve à un état (E3) de mise en mouvement ; et
      un module (24) de détection d'une discontinuité configuré pour détecter un saut sur la distance restante à parcourir (d_rest) ayant un impact sur la consigne de vitesse (V_cons) ; **caractérisé en ce que** le système d'aide au stationnement comprend:

         un module (26) de remplacement du profil de décélération nominal par un profil de décélération en mode dégradé si une discontinuité est détectée ;
         et un module (28) de sortie dudit mode dégradé.

2. Système selon la revendication 1 comprenant quatre états de fonctionnement, un état initial (E0) correspondant à la phase de recherche d'une place de stationnement par le système de détection de places de stationnement, un premier état (E1) correspondant à une phase d'attente du début de la manœuvre, un deuxième état (E2) correspondant à une phase d'annulation du freinage, un troisième état (E3) de mise en mouvement et un quatrième état (E4) correspondant à la phase d'activation du freinage.

3. Système selon la revendication 1 ou 2, dans lequel le module (26) de remplacement de profil prend en compte la distance restante à partir de laquelle le profil de décélération en mode dégradé doit rejoindre le profil nominal afin de respecter une distance critique (d_end) selon l'équation :

[Math 3]
$$V_{deg}^{+}(d_{\_end}) = V_{tau}^{+}(d_{\_end})$$

Avec un point de départ du profil de décélération en mode dégradé selon l'équation :

[Math 4]
$$V_{deg}^{+}(d\_rest(+)) = V\_cons(-)$$

4. Système selon l'une quelconque des revendications 1 à 3, dans lequel une discontinuité est détectée si les trois conditions ci-dessous sont respectées :

   1. Lorsque la différence ($\Delta$d_rest) entre la distante restante à parcourir (d_rest(-)) avant la discontinuité et la distante restante à parcourir (d_rest(+)) après la discontinuité est supérieure ou égale à une valeur de seuil (S1) ;

2. Lorsque la vitesse maximale autorisée (Vtau(+)) après la discontinuité est inférieure à la consigne de vitesse (V_cons (-)) avant la discontinuité ; et
3. Lorsque la distance restante à parcourir (d_rest(+)) après la discontinuité est supérieure à une valeur de seuil (S2) sous laquelle le passage en mode dégradé n'est plus possible, le profil de vitesse restant en mode nominal si l'une de ces trois conditions n'est pas vérifiée.

5. Système selon l'une quelconque des revendications précédentes, dans lequel le module (28) de sortie du mode dégradé est configuré pour sortir dudit mode dégradé lorsqu'une des deux conditions suivantes sont vérifiées, à savoir lorsque la distance restante à parcourir (d_rest) est inférieure à la distance critique (d_end) ou lorsque la vitesse maximale autorisée après discontinuité (Vtau (+)) est supérieure ou égale à la consigne de vitesse avant discontinuité (V_cons (-)).

6. Système selon la revendication 5, dans lequel le module (14) de régulation des discontinuités est configuré pour continuer à détecter toute discontinuité après le retour au profil de décélération en mode nominal.

7. Système selon l'une quelconque des revendications précédentes, dans lequel le module (14) de régulation des discontinuités comprend un module (30) d'inhibition de toutes les limitations liées au confort au niveau du freinage.

8. Procédé (40) d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur œdométrique, un accéléromètre, une interface visuelle et sonore et un moyen d'activation d'une fonction pilotage automatique, où l'on calcule une valeur de consigne de vitesse du véhicule (V_cons) en fonction de la vitesse maximale (V_max) du véhicule à ne pas dépasser et la distance restante (d_rest) à parcourir et l'on régule toute discontinuité sur la distance restante à parcourir (d_rest), lors de la régulation des discontinuité, on vérifie que le système (10) se trouve à un état (E3) de mise en mouvement, et on vérifie qu'une discontinuité est détectée, **caractérisé en ce qu'**on remplace le profil de décélération nominal par un profil de décélération en mode dégradé et on prévoit la sorte dudit mode dégradé.

9. Procédé selon la revendication 8, dans lequel une discontinuité est détectée si les trois conditions ci-dessous sont respectées :

1. Lorsque la différence ($\Delta$d_rest) entre la distante restante à parcourir (d_rest(-)) avant la discontinuité et la distante restante à parcourir (d_rest(+)) après la discontinuité est supérieure ou égale à une valeur de seuil (S1) ;
2. Lorsque la vitesse maximale autorisée (Vtau(+)) après la discontinuité est inférieure à la consigne de vitesse (V_cons (-)) avant la discontinuité ; et
3. Lorsque la distance restante à parcourir (d_rest(+)) après la discontinuité est supérieure à une valeur de seuil (S2) sous laquelle le passage en mode dégradé n'est plus possible, le profil de vitesse restant en mode nominal si l'une de ces trois conditions n'est pas vérifiée.

10. Procédé selon la revendication 8 ou 9, dans lequel on prévoit la sortie du mode dégradé lorsqu'une des deux conditions suivantes sont vérifiées, à savoir lorsque la distance restante à parcourir (d_rest) est inférieure à la distance critique (d_end) ou lorsque la vitesse maximale autorisée après discontinuité (Vtau (+)) est supérieure ou égale à la consigne de vitesse avant discontinuité (V_cons (-)).

**Patentansprüche**

1. Einparkhilfssystem eines Kraftfahrzeugs, das das Einparken des Fahrzeugs von einem Verkehrsweg zu einem freien Stellplatz und das Ausfahren aus dem Stellplatz zum Verkehrsweg gestattet, wobei das Kraftfahrzeug ein System zur Detektion von Hindernissen, ein System zur Detektion von Stellplätzen, eine elektrische Hilfskraftlenkung, die im Einschlagwinkel steuerbar ist, einen Motor und ein Bremssystem, die im Drehmoment steuerbar sind, ein Automatikgetriebe oder ein "Shift-by-Wire"-System, mindestens einen odometrischen Sensor, einen Beschleunigungsmesser und ein Mittel zur Aktivierung einer Automatiksteuerfunktion umfasst, wobei das Einparkhilfssystem Folgendes umfasst:

ein Modul (12) zur Geschwindigkeitsregulierung, das ein Modul (16) zur Berechnung eines Geschwindigkeits-Vorgabewerts des Fahrzeugs (V_cons) in Abhängigkeit von der Höchstgeschwindigkeit (V max) des Fahrzeugs, die nicht überschritten werden soll, und der zurückzulegenden Reststrecke (d_rest) umfasst; und

ein Modul (14) zur Regulierung jeder Unregelmäßigkeit in der zurückzulegenden Reststrecke (d_rest), umfassend:

ein Modul (22) zur Überprüfung, dass sich das System in einem Inbewegungversetzungs-Zustand (E3) befindet; und

ein Modul (24) zur Detektion einer Unregelmäßigkeit, das dazu ausgebildet ist, einen Sprung in der zurückzulegenden Reststrecke (d_rest) zu detektieren, der eine Auswirkung auf die Geschwindigkeitsvorgabe (V_cons) hat; **dadurch gekennzeichnet, dass** das Einparkhilfssystem Folgendes umfasst:

ein Modul (26) zur Ersetzung des Nenn-Verzögerungsprofils durch ein Verzögerungsprofil im Notlaufmodus, wenn eine Unregelmäßigkeit detektiert wird;

und ein Modul (28) zum Verlassen des Notlaufmodus.

2. System nach Anspruch 1, umfassend vier Betriebszustände, einen Anfangszustand (E0), der der Phase des Suchens nach einem Stellplatz durch das System zur Detektion von Stellplätzen entspricht, einen ersten Zustand (E1), der der Phase des Wartens auf den Beginn des Manövers entspricht, einen zweiten Zustand (E2), der der Phase des Aufhebens des Bremsens entspricht, einen dritten Zustand (E3) des Inbewegungversetzens und einen vierten Zustand (E4), der der Phase des Aktivierens des Bremsens entspricht.

3. System nach Anspruch 1 oder 2, wobei das Profilersetzungsmodul (26) die Reststrecke, ab welcher das Verzögerungsprofil im Notlaufmodus wieder das Nennprofil erreichen soll, um eine kritische Strecke (d_end) einzuhalten, gemäß folgender Gleichung berücksichtigt:

[Math 3]

$$V_{deg}^{+}(d\_end) = V_{tau}^{+}(d\_end)$$

Mit einem Anfangspunkt des Verzögerungsprofils im Notlaufmodus gemäß folgender Gleichung:

[Math 4]

$$V_{deg}^{+}(d\_rest\,(+)) = V\_cons(-)$$

4. System nach einem der Ansprüche 1 bis 3, wobei eine Unregelmäßigkeit detektiert wird, wenn die drei nachstehenden Bedingungen gegeben sind:

1. Wenn die Differenz ($\Delta$d_rest) zwischen der zurückzulegenden Reststrecke (d_rest(-)) vor der Unregelmäßigkeit und der zurückzulegenden Reststrecke (d_rest(+)) nach der Unregelmäßigkeit größer als oder gleich einem Schwellenwert (S1) ist;

2. Wenn die gestattete Höchstgeschwindigkeit (Vtau(+)) nach der Unregelmäßigkeit kleiner als die Geschwindigkeitsvorgabe (V_cons (-)) vor der Unregelmäßigkeit ist; und

3. Wenn die zurückzulegende Reststrecke (d_rest(+)) nach der Unregelmäßigkeit größer als ein Schwellenwert (S2) ist, unter welchem der Wechsel in den Notlaufmodus nicht mehr möglich ist, wobei das Geschwindigkeitsprofil im Nennmodus bleibt, wenn eine dieser drei Bedingungen nicht überprüft ist.

5. System nach einem der vorhergehenden Ansprüche, wobei das Modul (28) zum Verlassen des Notlaufmodus dazu ausgebildet ist, den Notlaufmodus zu verlassen, wenn eine der zwei folgenden Bedingungen überprüft ist, und zwar wenn die zurückzulegende Reststrecke (d_rest) unter der kritischen Strecke (d_end) liegt oder wenn die gestattete Höchstgeschwindigkeit nach der Unregelmäßigkeit (Vtau (+)) größer als oder gleich der Geschwindigkeitsvorgabe vor der Unregelmäßigkeit (V_cons (-)) ist.

6. System nach Anspruch 5, wobei das Modul (14) zur Regulierung der Unregelmäßigkeiten dazu ausgebildet ist, nach der Rückkehr zum Verzögerungsprofil im Nennmodus weiter jede Unregelmäßigkeit zu detektieren.

7. System nach einem der vorhergehenden Ansprüche, wobei das Modul (14) zur Regulierung der Unregelmäßigkeiten ein Modul (30) zur Unterdrückung aller Begrenzungen in Verbindung mit dem Bremskomfort umfasst.

8. Einparkhilfsverfahren (40) eines Kraftfahrzeugs, das das Einparken des Fahrzeugs von einem Verkehrsweg zu einem freien Stellplatz und das Ausfahren aus dem Stellplatz zum Verkehrsweg gestattet, wobei das Kraftfahrzeug ein System zur Detektion von Hindernissen, ein System zur Detektion von Stellplätzen, eine elektrische Hilfskraftlenkung, die im Einschlagwinkel steuerbar ist, einen Motor und ein Bremssystem, die im Drehmoment steuerbar sind, ein Automatikgetriebe oder ein "Shift-by-Wire"-System, mindestens einen odometrischen Sensor, einen Beschleunigungsmesser, eine visuelle und Audio-Schnittstelle und ein Mittel zur Aktivierung einer Automatiksteuerfunktion umfasst, wobei ein Geschwindigkeits-Vorgabewert des Fahrzeugs (V_cons) in Abhängigkeit von der Höchstgeschwindigkeit (V_max) des Fahrzeugs, die nicht überschritten werden soll, und der zurückzulegenden Reststrecke (d_rest) berechnet wird und jede Unregelmäßigkeit auf der zurückzulegenden Reststrecke (d_rest) reguliert wird, beim Regulieren der Unregelmäßigkeiten überprüft wird, dass sich das System (10) in einem Inbewegungversetzungs-Zustand (E3) befindet, und überprüft wird, dass eine Unregelmäßigkeit detektiert ist, **dadurch gekennzeichnet, dass** das Nenn-Verzögerungsprofil durch ein Verzögerungsprofil im Notlaufmodus ersetzt wird und das Verlassen des Notlaufmodus vorgesehen wird.

9. Verfahren nach Anspruch 8, wobei eine Unregelmäßigkeit detektiert wird, wenn die drei nachstehenden Bedingungen gegeben sind:

1. Wenn die Differenz ($\Delta$d_rest) zwischen der zurückzulegenden Reststrecke (d_rest(-)) vor der Unregelmäßigkeit und der zurückzulegenden Reststrecke (d_rest(+)) nach der Unregelmäßigkeit größer als oder gleich einem Schwellenwert (S1) ist;
2. Wenn die gestattete Höchstgeschwindigkeit (Vtau(+)) nach der Unregelmäßigkeit kleiner als die Geschwindigkeitsvorgabe (V_cons (-)) vor der Unregelmäßigkeit ist; und
3. Wenn die zurückzulegende Reststrecke (d_rest(+)) nach der Unregelmäßigkeit größer als ein Schwellenwert (S2) ist, unter welchem der Wechsel in den Notlaufmodus nicht mehr möglich ist, wobei das Geschwindigkeitsprofil im Nennmodus bleibt, wenn eine dieser drei Bedingungen nicht überprüft ist.

10. Verfahren nach einem der Ansprüche, 8 oder 9, wobei das Verlassen des Notlaufmodus vorgesehen wird, wenn eine der zwei folgenden Bedingungen überprüft sind, und zwar wenn die zurückzulegende Reststrecke (d_rest) unter der kritischen Strecke (d_end) liegt oder wenn die gestattete Höchstgeschwindigkeit nach der Unregelmäßigkeit (Vtau (+)) größer als oder gleich der Geschwindigkeitsvorgabe vor der Unregelmäßigkeit (V_cons (-)) ist.

**Claims**

1. System for assisting with parking a motor vehicle, allowing the vehicle to be parked from a traffic lane into a free parking space and said parking space to be exited from into the traffic lane, said motor vehicle comprising a system for detecting obstacles, a system for detecting parking spaces, power assisted steering that is controllable to set steering angle, an engine or motor and a braking system that are controllable to set torque, an automatic gearbox or a shift-by-wire system, at least one odometric sensor, an accelerometer, and a means for activating an automatic driving function, the system for assisting with parking comprising:

a module (12) for regulating speed comprising a module (16) for computing a setpoint value (V_cons) of the speed of the vehicle depending on the maximum speed (V_max) of the vehicle not to be exceeded and the distance (d_rest) remaining to be travelled; and
a module (14) for regulating any discontinuity in the distance (d_rest) remaining to be travelled, comprising:

a module (22) for verifying that the system is in a state (E3) of movement; and
a module (24) for detecting a discontinuity, this module being configured to detect a jump in the distance (d_rest) remaining to be travelled that has an impact on the speed setpoint (V_cons);
**characterized in that** the system for assisting with parking comprises:

a module (26) for replacing the nominal deceleration profile with a degraded-mode deceleration profile if a discontinuity is detected;
and a module (28) for exiting from said degraded mode.

2. System according to Claim 1 comprising four operating states, an initial state (E0) corresponding to the phase in which a parking space is sought by the system for detecting parking spaces, a first state (E1) corresponding to a phase of waiting for the start of the manoeuvre, a second state (E2) corresponding to a phase of releasing the brakes, a third state (E3) of movement and a fourth state (E4) corresponding to the phase of applying the brakes.

3. System according to Claim 1 or 2, wherein the profile-replacing module (26) takes into account the distance remaining before the degraded-mode deceleration profile must rejoin the nominal profile in order to respect a critical distance (d_end) according to the equation:

[Math 3]

$$V_{deg}^+(d_{\_end}) = V_{tau}^+(d_{\_end})$$

with a start point of the degraded-mode deceleration profile according to the equation:

[Math 4]

$$V_{deg}^+(d\_rest(+)) = V\_cons(-).$$

4. System according to any one of Claims 1 to 3, wherein a discontinuity is detected if the three conditions below are met:

1. when the difference (Δd_rest) between the distance (d_rest(-)) remaining to be travelled before the discontinuity and the distance (d_rest(+)) remaining to be travelled after the discontinuity is larger than or equal to a threshold value (S1);
2. when the maximum speed (Vtau (+)) permitted after the discontinuity is lower than the speed setpoint (V_cons(-)) before the discontinuity; and
3. when the distance (d_rest(+)) remaining to be travelled after the discontinuity is larger than a threshold value (S2) under which passage to degraded mode is no longer possible,

the speed profile remaining in nominal mode if one of these three conditions is not met.

5. System according to any one of the preceding claims, wherein the module (28) for exiting from degraded mode is configured to exit from said degraded mode when one of the two following conditions is met, namely when the distance (d_rest) remaining to be travelled is smaller than the critical distance (d end) or when the maximum speed (Vtau(+)) permitted post-discontinuity is higher than or equal to the speed setpoint (V_cons(-)) prediscontinuity.

6. System according to Claim 5, wherein the module (14) for regulating discontinuities is configured to continue to detect any discontinuity after the return to the nominal-mode deceleration profile.

7. System according to any one of the preceding claims, wherein the module (14) for regulating discontinuities comprises a module (30) for inhibiting any comfortrelated limitation with respect to braking level.

8. Method (40) for assisting with parking a motor vehicle, allowing the vehicle to be parked from a traffic lane into a free parking space and said parking space to be exited from into the traffic lane, said motor vehicle comprising a system for detecting obstacles, a system for detecting parking spaces, power assisted steering that is controllable to set steering angle, an engine or motor and a braking system that are controllable to set torque, an automatic gearbox or a shift-by-wire system, at least one odometric sensor, an accelerometer, a visual and audio interface and a means for activating an automatic driving function,
a setpoint value (V_cons) of the speed of the vehicle being computed depending on the maximum speed (V_max) of the vehicle not to be exceeded and the distance (d_rest) remaining to be travelled, and any discontinuity in the distance (d_rest) remaining to be travelled being regulated,
it being verified that, during the regulation of the discontinuity, the system (10) is in a state (E3) of movement, and it being verified that a discontinuity has been detected; **characterized in that**
the nominal deceleration profile is replaced with a degraded-mode deceleration profile and provision is made to exit from said degraded mode.

9. Method according to Claim 8, wherein a discontinuity is detected if the three conditions below are met:

1. when the difference (∆d_rest) between the distance (d_rest(-)) remaining to be travelled before the discontinuity and the distance (d_rest(+)) remaining to be travelled after the discontinuity is larger than or equal to a threshold value (S1);

2. when the maximum speed (Vtau(+)) permitted after the discontinuity is lower than the speed setpoint (V_cons(-)) before the discontinuity; and

3. when the distance (d_rest(+)) remaining to be travelled after the discontinuity is larger than a threshold value (S2) under which passage to degraded mode is no longer possible,

the speed profile remaining in nominal mode if one of these three conditions is not met.

10. Method according to Claim 8 or 9, wherein provision is made to exit from the degraded mode when one of the two following conditions is met, namely when the distance (d_rest) remaining to be travelled is smaller than the critical distance (d_end) or when the maximum speed (Vtau(+)) permitted post-discontinuity is higher than or equal to the speed setpoint (V_cons(-)) prediscontinuity.

**FIG. 1**

**FIG. 2**

**FIG. 3**

**FIG. 4**

**FIG. 5**

**FIG. 6**

**FIG. 7**

**FIG. 8**

**EP 3 730 365 B1**

**RÉFÉRENCES CITÉES DANS LA DESCRIPTION**

**Documents brevets cités dans la description**

- WO 2014167255 A1
- WO 2014191209 A1
- US 2019092319 A
- FR 3063701 A1
- WO 2019011522 A
- DE 102008064041 A1